# EUROPEAN PATENT SPECIFICATION

(11) **EP 3 267 236 B1**
(45) Date of publication and mention of the grant of the patent: **10.03.2021**
(21) Application number: 17178567.8
(22) Date of filing: 29.06.2017
(51) Int. Cl.: G02B 26/10

(54) **OPTICAL SCANNER, PROJECTOR, AND HEADS-UP DISPLAY**
OPTISCHER SCANNER, PROJEKTOR UND HEAD-UP-ANZEIGE
SCANNER OPTIQUE, PROJECTEUR ET AFFICHAGE TÊTE HAUTE

(30) Priority: 04.07.2016 JP 2016132794
(43) Date of publication of application: 10.01.2018
(73) Proprietor: Ricoh Company, Ltd., Tokyo 143-8555 (JP)
(72) Inventor: AKANUMA, Goichi, Tokyo 143-8555 (JP)
(74) Representative: SSM Sandmair

(56) References cited:
- WO-A1-2007/017521
- WO-A1-2013/179493
- JP-A- 2010 145 922
- JP-A- 2014 153 375
- US-A1- 2003 015 652
- US-A1- 2010 026 960
- US-A1- 2015 370 069

## Description

### BACKGROUND

### Technical Field

Embodiments of the present disclosure relate to an optical scanner, a projector, and a heads-up display.

### Background Art

Conventionally, optical scanners are known in the art where, for example, a micro-electromechanical systems (MEMS) mirror that is produced by MEMS processing is used as a light deflector, and the light deflector deflects the laser beams emitted from a light source so as to scan a to-be-scanned surface two-dimensionally in the main scanning direction and the sub-scanning direction. Due to such a configuration, an image can be drawn.

In this type of optical scanner, even if the voltage applied to the light deflector is maintained at a constant level, the degree of amplitude of the light deflector fluctuates, due to, for example, changes in the sensitivity of amplitude to the resonance frequency of the light deflector, which are caused, for example, by changes in temperature or changes over time. In order to deal with such a situation, it has been proposed that a photodetector that detects the laser beams that have scanned a to-be-scanned surface is provided and the amplitude of the light deflector is controlled based on the timing at which the photodetector detected the laser beams (see, for example, JP-2015-049266-A and JP-2015-148654-A).

In order for the photodetector to detect the laser beams that have scanned the to-be-scanned surface, a field in which the photodetector detects the laser beams (hereinafter, such a field will be referred to as a "detection field") needs to be allocated in the range of the to-be-scanned surface in which the laser beams are scanned (hereinafter, such a range will be referred to as an "optical scanning range"). For example, JP-2015-049266-A discloses a device where, in the optical scanning range on a lens array that serves as a to-be-scanned surface, a photodetector is arranged at a position in the main scanning direction away from the image drawing area that is used for drawing an image, i.e., the image drawing area irradiated with the laser beams that have been modulated according to the image data (see FIG. 4 of JP-2-15-049266-A). Moreover, JP-2015-148654-A discloses a device where, in the optical scanning range on a cover glass that serves as a to-be-scanned surface, a reflection unit that reflects the laser beams so as to enter the photodetector is arranged at a position in the sub-scanning direction away from the image drawing area (see FIG. 4 of JP-2015-148654-A).

However, in the configurations disclosed in JP-2015-049266-A or JP-2015-148654-A, the proportion of the image drawing area in the optical scanning range is small. For this reason, in particular, when a MEMS mirror whose maximum degree of amplitude is mechanically restricted is used as the light deflector, there is a problem that it is difficult to have a wide angle of view.

US 2010/026960 A1 discloses a scanning beam overlay projection system that displays an image on a projection surface by scanning a light beam in a raster pattern.

US 2003/015652 A1 relates to a two-dimensional optical scanner adapted to display a two-dimensional image by causing a beam of light that is scanning in a direction to also scan in a second direction.

WO 2007/017521 A1 relates to laser light display projectors and methods for controlling the projection of light onto a display screen.

WO 2013/179493 A1 discloses an image projection apparatus including an optical element, a first light source control means, a light detecting means, a projection range recognizing means, and a second light source control means.

JP 2014 153375 A provides an image forming apparatus capable of improving quality of images.

US 2015/370069 A1 provides an image display device which can effectively reduce visible interfering noise while maintaining the brightness of an enlarged virtual image displayed by two-dimensional scanning with a coherent light beam.

JP 2010 145922 A relates to an image forming apparatus for projecting an image formed of an array of a plurality of pixels using a laser projector.

### SUMMARY

Embodiments of the present disclosure described herein provide an optical scanner, a projector, and a heads-up display. The present invention is defined by the subject-matter of the independent claims. The dependent claims are directed to embodiments of advantage.

Advantageously, the optical scanner includes a light source configured to emit light, a light deflector configured to deflect the light emitted from the light source to scan a to-be-scanned surface in a first direction and a second direction, a photodetector disposed on or above the to-be-scanned surface and configured to detect incident light and output a signal, and a controller configured to control at least one of operation of the light source and operation of the light deflector based on the signal output from the photodetector. The to-be-scanned surface includes an optical scanning range on which the light is scanned, the optical scanning range including at least one detection field in which the photodetector detects the light, and an image drawing area on which an image is drawn. The image drawing area includes a first area neighboring the at least one detection field in the first direction and a second area neighboring the at least one detection field in the second direction.

According to one aspect of the present disclosure, the proportion of the image drawing area in the optical scanning range can be increased to widen the angle of view.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a diagram illustrating a general configuration of a projector according to a first embodiment of the present disclosure.
FIG. 2 is a diagram illustrating a concrete example of a light deflector, according to an embodiment of the present disclosure.
FIG. 3 is a plan view of a light transmission member on a light deflector side, which serves as a to-be-scanned surface, according to an embodiment of the present disclosure.
FIG. 4 is a diagram illustrating a layout of an optical scanning range, according to the first embodiment of the present disclosure.
FIG. 5 is a diagram illustrating the timings of a laser driving signal, according to an embodiment of the present disclosure.
FIG. 6 is a diagram illustrating a general configuration of a projector according to a second embodiment of the present disclosure.
FIG. 7 is a diagram illustrating a concrete example of an intermediate screen.
FIG. 8 is a diagram illustrating the relative positions of an intermediate screen and a photodetector, according to an embodiment of the present disclosure.
FIG. 9 is a magnified view of the right side of the intermediate screen of FIG. 8.
FIG. 10 is a diagram illustrating a layout of an optical scanning range, according to the second embodiment of the present disclosure.
FIG. 11 is a diagram illustrating the first modification of the intermediate screen of FIG. 7.
FIG. 12 is a diagram illustrating the second modification of the intermediate screen of FIG. 7, according to an embodiment of the invention.
FIG. 13 is a diagram illustrating the third modification of the intermediate screen of FIG. 7, according to an embodiment of the invention.
FIG. 14 is a diagram illustrating the fourth modification of the intermediate screen of FIG. 7, according to an embodiment of the invention.
FIG. 15 is a diagram illustrating an optical unit provided with a laser beam source and a light deflector, according to a modification of the embodiments of the present disclosure.
FIG. 16 is a diagram illustrating a general configuration of a heads-up display according to a third embodiment of the present disclosure.
FIG. 17 is a diagram illustrating a vehicle V provided with the heads-up display of FIG. 16.
FIG. 18 is a diagram illustrating a general configuration of the optical scanner provided for the heads-up display of FIG. 16.
FIG. 19 is a diagram illustrating an image that is projected onto a front windshield of a vehicle upon being drawn on the intermediate screen of FIG. 18.
FIG. 20 is a diagram illustrating another image that is projected onto a front windshield of a vehicle upon being drawn on the intermediate screen of FIG. 18.
FIG. 21 is a diagram illustrating further another image that is projected onto a front windshield of a vehicle upon being drawn on the intermediate screen of FIG. 18.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

Hereinafter, some embodiments of an optical scanner, a projector, and a heads-up display are described in detail with reference to the accompanying drawings.

### <First Embodiment>

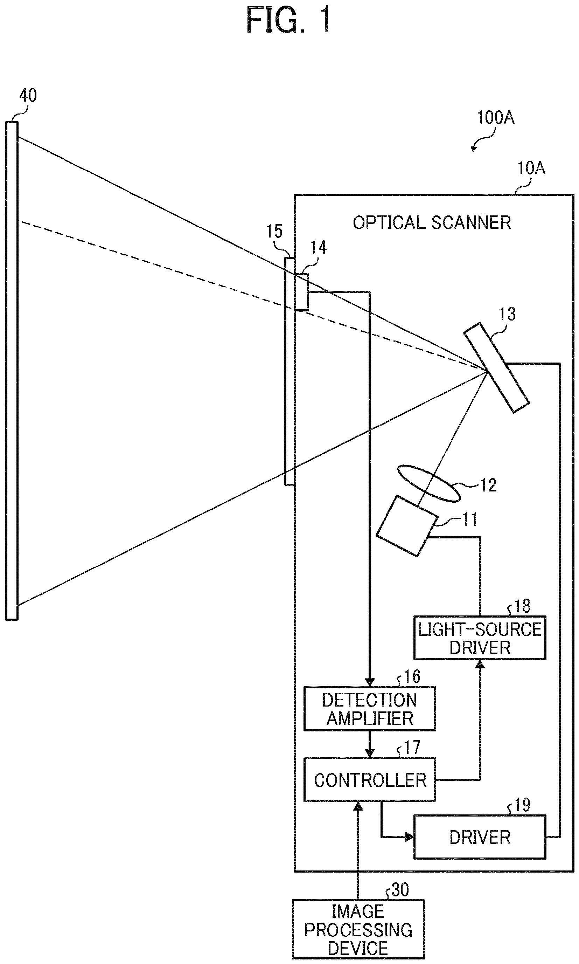

FIG. 1 is a diagram illustrating a general configuration of a projector 100A according to a first embodiment of the present disclosure.

As illustrated in FIG. 1, the projector 100A according to the present embodiment includes an optical scanner 10A and an image processing device 30. The image processing device 30 performs various kinds of image processing on the image data from, for example, a host device such as a personal computer (PC) to display the image data as a projection image, and outputs the resultant image data to the optical scanner 10A.

As the components of its optical system, the optical scanner 10A includes a laser beam source 11, a collimator lens 12, a light deflector 13, and a photodetector 14. Moreover, as the components of its control system, the optical scanner 10A includes a detection amplifier 16, a controller 17, a light-source driver 18, and a driver 19.

According to the control made by the controller 17, the laser beam source 11 is driven by the light-source driver 18 to emit laser beams. The laser beams that are emitted from the laser beam source 11 are approximately collimated by the collimator lens 12 and enter the light deflector 13.

According to the control made by the controller 17, the light deflector 13 is driven by the driver 19 to oscillate in two directions that are orthogonal to each other by amplitude of a predetermined angle (for example, a few degrees to over ten degrees), and deflects the laser beams emitted from the laser beam source 11 to scan a to-be-scanned surface two-dimensionally in the main scanning direction and the sub-scanning direction. In the present embodiment, it is assumed that a MEMS mirror that two-dimensionally scans the laser beams is used as the light deflector 13. However, the light deflector 13 may be configured by combining two MEMS mirrors each of which is capable of performing only one-dimensional scanning. Alternatively, a rotationally scanning mirror such as a polygon mirror may be used for performing scanning in one of the two directions.

In the present embodiment, the exit of the optical scanner 10A is covered by the light transmission member 15 such as a cover glass, and the surface of the light transmission member 15 on the light deflector 13 side serves as a surface to be scanned by laser beams. Further, the photodetector 14 is arranged on the surface of the light transmission member 15 on the light deflector 13 side, which serves as the to-be-scanned surface.

The photodetector 14 detects the laser beams that have scanned the to-be-scanned surface as deflected by the light deflector 13, and for example, a photodetector that outputs electrical signals at timings when the laser beams traverse the photoreceptor may be used as the photodetector 14. The output of the photodetector 14 is amplified by the detection amplifier 16, and is input to the controller 17. The controller 17 controls the driving signals for the light deflector 13 to be supplied to the driver 19, according to the output from the photodetector 14, thereby stabilizing the operation of the light deflector 13.

Moreover, the controller 17 controls the operation of the laser beam source 11 in accordance with the operation of the light deflector 13 such that an image according to the image data output from the image processing device 30 is drawn on the to-be-scanned surface by the laser beams that scan the to-be-scanned surface. In other words, the controller 17 controls the light-source driver 18 such that the laser beams whose light intensity has been modulated according to the image data will be emitted from the laser beam source 11 in accordance with the timings at which the to-be-scanned surface is scanned by the light deflector 13. In such intensity modulation, pulse width or amplitude may be modulated. The light-source driver 18 converts the modulated signal into electric current capable of driving the laser, and the laser beam source 11 is driven by the obtained electric current.

The projector 100A according to the present embodiment projects onto the screen 40 an image that is drawn on the to-be-scanned surface (i.e., the surface of the light transmission member 15 on the light deflector 13 side) as the to-be-scanned surface is two-dimensionally scanned by the laser beams according to the image data. Accordingly, a projection image is displayed on the screen 40. Note also that the light transmission member 15 may be replaced with a light modulator such as a liquid crystal display (LCD), and the laser beams incident on this light modulator may be modulated according to the image data prior to the projection onto the screen 40. In such a configuration, the incident plane of the light modulator on which the laser beams are incident serves as the to-be-scanned surface.

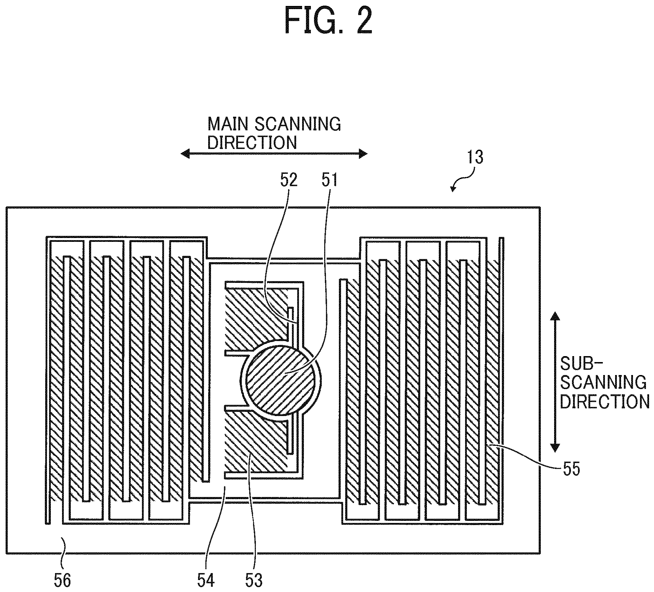

FIG. 2 is a diagram illustrating a concrete example of the light deflector 13 that deflects the laser beams emitted from the laser beam source 11 to scan a to-be-scanned surface two-dimensionally, according to the present embodiment.

The light deflector 13 illustrated in FIG. 2 is an example of the light deflector 13 that is configured as a MEMS mirror.

The light deflector 13 as illustrated in FIG. 2 has a unimorph structure where a piezoelectric material is laminated on one side of a silicon member, and operates as the drive bars are deformed by application of voltage. In the light deflector 13, a mirror unit 51 that reflects the laser beams is supported in a rotatable and oscillatable manner by a fixed base 56 in two directions that are orthogonal to each other by nesting structure. Note that one of the orthogonal two directions in which the mirror unit 51 rotates and oscillates corresponds to the main scanning direction in which the to-be-scanned surface is scanned by the laser beams, and the other one of the orthogonal two directions corresponds to the sub-scanning direction in which the to-be-scanned surface is scanned by the laser beams.

The inner supporting structure that supports the mirror unit 51 in a direct manner is the main-scanning axis (high-speed axis), and the outer supporting structure is the sub-scanning axis (low-speed axis). The main-scanning axis vibrates the mirror unit 51 as a torsion bar spring 52 is twisted due to the voltage applied to a main-scanning drive bar 53. The driving of the main-scanning axis is sinusoidal driving (resonant driving) where sinusoidal voltage of resonance frequency in the mode of vibration in which the mirror unit 51 oscillates is applied, and vibrates the mirror unit 51 efficiently using the resonant operation. On the other hand, the sub-scanning axis vibrates the mirror unit 51 as a movable frame 54 is inclined due to the voltage applied to a sub-scanning drive bar 55. The driving of the main-scanning axis is sawtooth driving (non-resonant driving) where voltage of sawtooth waveform is applied. As the amount of deformation in the unimorph structure is small, it is difficult for the sub-scanning axis of non-resonant operation to have wide amplitude. In order to handle such a situation, the sub-scanning drive bar 55 has a meandering structure where the drive bars are bent and coupled and the rotation amplitude is accumulated.

In the light deflector 13 as configured above, for example, the piezoelectric material and the physical properties of the silicon material in the structure division vary according to the temperature or the environments. For this reason, even if constant voltage and amplitude is fed, the amplitude of the mirror unit 51 tends to fluctuate. In order to handle such a situation, the photodetector 14 that detects the laser beams that have scanned the to-be-scanned surface using the light deflector 13 is provided, and the operation of the light deflector 13 is controlled based on the timing at which the photodetector 14 detected the laser beams. By so doing, optically scanning can be performed with stability.

In order for the photodetector 14 to detect the laser beams that have scanned the to-be-scanned surface, a detection field in which the photodetector 14 detects the laser beams needs to be allocated in the optical scanning range of the to-be-scanned surface in which the laser beams are scanned. Due to this configuration, the image drawing area on which an image is to be drawn by the laser beams that scan the to-be-scanned surface is limited by the detection field. However, in the present embodiment, the detection field and the image drawing area are laid out so as to maximize the image drawing area in the optical scanning range.

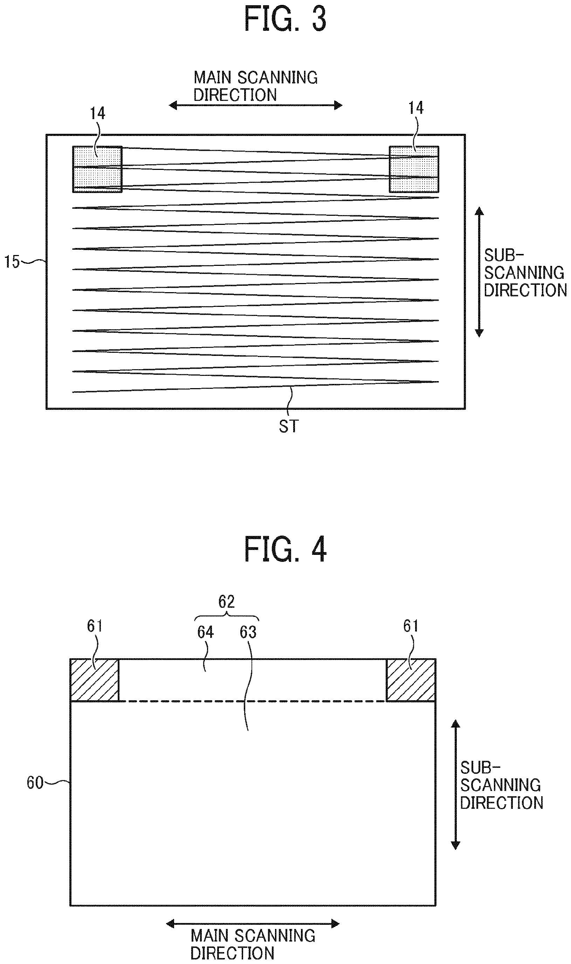

FIG. 3 is a plan view of the light transmission member 15 on the light deflector 13 side, which serves as a to-be-scanned surface in the optical scanner 10A, according to the present embodiment.

FIG. 4 is a diagram illustrating a layout of an optical scanning range 60, according to the present embodiment.

In the present embodiment, for example, as illustrated in FIG. 3, in order to detect the laser beams that are two-dimensionally scanned on the to-be-scanned surface at both ends in the main scanning direction and one end in the sub-scanning direction, the photodetector 14 is each disposed at positions overlapping with the trajectory ST of the laser beam at both ends on the upper side of FIG. 3 in the main scanning direction. Due to this configuration, as illustrated in FIG. 4, the right and left edges on the upper side of the optical scanning range 60 serve as the detection fields 61. Further, in the present embodiment, all the area of the optical scanning range 60 from which the detection fields 61 are removed is used as the image drawing area 62 on which an image is to be drawn by the laser beams that scan the to-be-scanned surface. In other words, the image drawing area 62 includes an area adjacent to the detection fields 61 in the main scanning direction, and an area adjacent to the detection fields 61 in the sub-scanning direction.

In the related art example disclosed in JP-2015-049266-A, as described above, a position in the main scanning direction away from the image drawing area serves as a detection field. For this reason, an area adjacent to the detection fields in the sub-scanning direction is not included in the image drawing area. In the related art example disclosed in JP-2015-148654-A, as described above, at a position in the sub-scanning direction away from the image drawing area serves as a detection field. For this reason, an area adjacent to the detection fields in the main scanning direction is not included in the image drawing area. As described above, in the related art examples, an area adjacent to the detection field in the optical scanning range in the main scanning direction or an area adjacent to the detection field in the optical scanning range in the sub-scanning direction is not included in the image drawing area. Due to this configuration, the proportion of the image drawing area in the optical scanning range is small, and it is difficult to have a wide angle of view.

By contrast, in the present embodiment, the image drawing area 62 in the optical scanning range 60 includes an area adjacent to the detection fields 61 in the main scanning direction, and an area adjacent to the detection fields 61 in the sub-scanning direction. Due to this configuration, the proportion of the image drawing area 62 in the optical scanning range 60 can be increased even if the amplitude of the light deflector 13 is the same, the dimension of the image drawing area 62 in the optical scanning range 60 becomes broader than that of the related art examples, and the angle of view of the projection image that is displayed on the screen 40 can be increased.

Note also that in the present embodiment where all the area of the optical scanning range 60 from which the detection fields 61 have been removed serves as the image drawing area 62, the shape of the image drawing area 62 is no longer in a simple rectangular shape, unlike the related art. Due to this configuration, when a single image is drawn on the entirety of the image drawing area 62, for example, some portion of the image may be lost, and the viewability may deteriorate. However, for example, the image drawing area 62 may be divided into a plurality of drawing areas with reference to the positions of the detection fields 61, and different kinds of images may be drawn on each of the drawing areas. Due to this configuration, images can be drawn in an appropriate manner in view of the shapes of the image drawing area 62.

For example, in the example case as illustrated in FIG. 4, the image drawing area 62 is divided into a main drawing area 63 that includes an area adjacent to the detection fields 61 in the sub-scanning direction, and a sub-drawing area 64 that includes an area adjacent to the detection fields 61 in the main scanning direction. For example, a main image whose size is relatively large is drawn in the main drawing area 63, and by contrast, a secondary image whose size is relatively small, such as an icon and a textual image, is drawn in the sub-drawing area 64. When the projector 100A displays a projection image on the screen 40, in most cases, the projection image to be displayed is an aggregate of a plurality of image elements, rather than a single image. For this reason, as described above, the image drawing area 62 is divided into a plurality of drawing areas, and different kinds of images are drawn on each of the drawing areas. Due to such a configuration, even if the shape of the image drawing area 62 is not in a simple rectangular shape, a projection image can be displayed on the screen 40 appropriately making full use of the image drawing area 62.

In the example as illustrated in FIG. 4, the right and left edges on the upper side of the optical scanning range 60 serve as the detection fields 61. However, it is satisfactory as long as the detection field 61 is arranged such that the photodetector 14 can detect the laser beams, which scan the to-be-scanned surface as deflected by the light deflector 13, at edges in the main scanning direction. In other words, it is satisfactory as long as the detection field 61 is arranged at least at edges of the optical scanning range 60 in the main scanning direction. For example, in place of the detection fields 61, as illustrated in FIG. 4, which are arranged at the right and left edges on the upper side of the optical scanning range 60, the detection field 61 may be arranged at each of the right and left edges on the downside, or the detection field 61 may be arranged at each of the right and left edges at the at the midpoint in the up-and-down directions (in the sub-scanning direction). Alternatively, the detection field 61 may be arranged only at one of the right and left edges of the optical scanning range 60 in the main scanning direction, instead of being arranged at both edges of the optical scanning range 60 in the main scanning direction. Also in such alternative configurations, the operation of the light deflector 13 is controlled based on the timing at which the photodetector 14 detected the laser beams, to enable stable optical scanning.

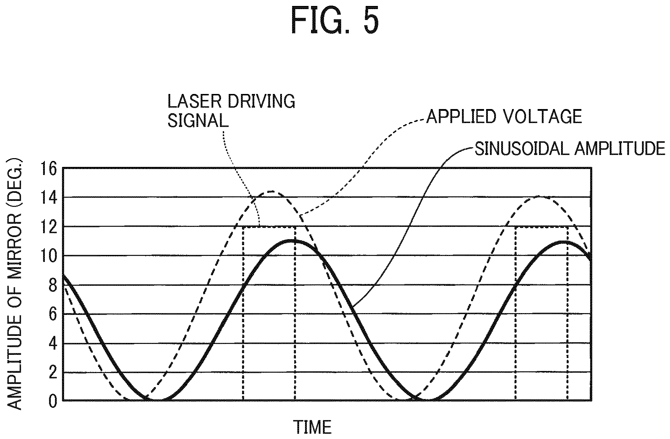

Note that when the amplitude of the light deflector 13 is actually controlled, there is some concern that an abrupt increase immediately after the start up in the amplitude of the MEMS mirror, which is configured as the light deflector 13, may damage the main-scanning axis. In order to avoid such a situation, the applied voltage is gradually increased to adjust the degree of amplitude. In this configuration, if the laser beams are being emitted from the laser beam source 11 at all times, unwanted image is drawn on the above image drawing area 62 and projected onto the screen 40. In order to avoid such a situation, when the amplitude of the light deflector 13 is to be controlled immediately after the start up, as illustrated in FIG. 5, it is desired that the laser driving signal be given to the laser beam source 11 in synchronization with the operation of the light deflector 13 such that the laser beam source 11 emits the laser beams only towards edge areas of the sinusoidal amplitude of the light deflector 13. Note that such edge areas of the sinusoidal amplitude of the light deflector 13 are edge areas in the main scanning direction. In actuality, as illustrated in FIG. 5, the phase of the voltage applied to the light deflector 13 becomes misaligned from the phase of the sinusoidal amplitude of the light deflector 13. In order to handle such a situation, the laser driving signals are given to the laser beam source 11 with the timings adjusted for such misalignment. Once the laser beam incident on the photodetector 14 is detected, even if the level of operation sensitivity of the light deflector 13 changes due to some cause, the amplitude can be maintained at a constant level by controlling the driving voltage within a prescribed range.

As described above with some concrete examples, according to the present embodiment, the detection field 61 is arranged at least at edges of the optical scanning range 60 in the main scanning direction, which is on the to-be-scanned surface, and the image drawing area 62 in the optical scanning range 60 includes an area adjacent to the detection fields 61 in the main scanning direction, and an area adjacent to the detection fields 61 in the sub-scanning direction. Accordingly, the proportion of the image drawing area 62 in the optical scanning range 60 is increased, and the angle of view of the projection image that is displayed on the screen 40 can be increased.

According to the present embodiment, the image drawing area 62 is divided into a plurality of drawing areas (including the main drawing area 63 and the sub-drawing area 64) with reference to the positions of the detection fields 61, and different kinds of images are drawn on each of the drawing areas. Due to this configuration, the image drawing area 62 that is not in a simple rectangular shape can effectively be utilized.

### <Second Embodiment>

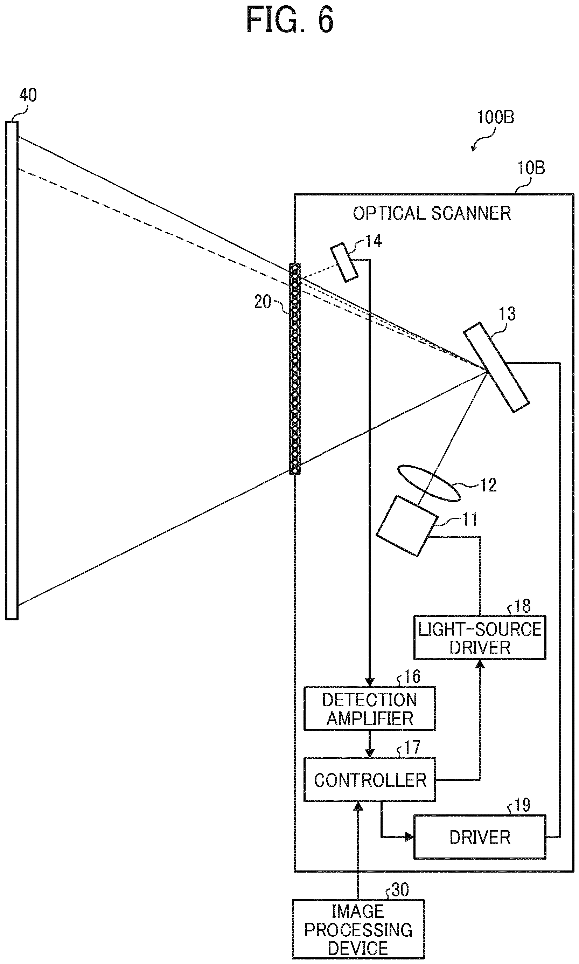

FIG. 6 is a diagram illustrating a general configuration of a projector 100B according to a second embodiment of the present disclosure.

The projector 100B according to the present embodiment is provided with an optical scanner 10B in place of the optical scanner 10A as above, which is the difference from the projector 100A according to the first embodiment. In the optical scanner 10B, an intermediate screen 20 is disposed at the exit in place of the light transmission member 15 in the optical scanner 10A as above, and this intermediate screen 20 serves as a surface to be scanned by laser beams. Moreover, in the optical scanner 10B, the photodetector 14 is not directly disposed onto the intermediate screen 20, but is arranged at a detached position so as to receive the laser beams that are reflected by the reflection unit, which is disposed on the intermediate screen 20. As the other configurations of the optical scanner 10B is equivalent to the configurations of the optical scanner 10A according to the first embodiment, in the following description, like reference signs are given to equivalent or corresponding elements, and overlapping descriptions are omitted where appropriate and only the differences from the first embodiment will be described.

The intermediate screen 20 includes a micro lens array where a large number of microlenses are arranged in the main scanning direction and the sub-scanning direction, and controls specific inconsistencies in brightness (speckle patterns) that are caused by interference of the laser beams that are two-dimensionally scanned by the microlens array. The curvature of the micro lenses that together configure the microlens array is determined based on the optical path length between the screen 40 and the micro lenses. The intermediate screen 20 is disposed at the exit of the optical scanner 10B, and serves as a surface to be scanned by the laser beams. Moreover, a reflection unit that reflects the laser beams so as to enter the photodetector 14 is disposed at least at an edge of the optical scanning range on the intermediate screen 20 in the main scanning direction.

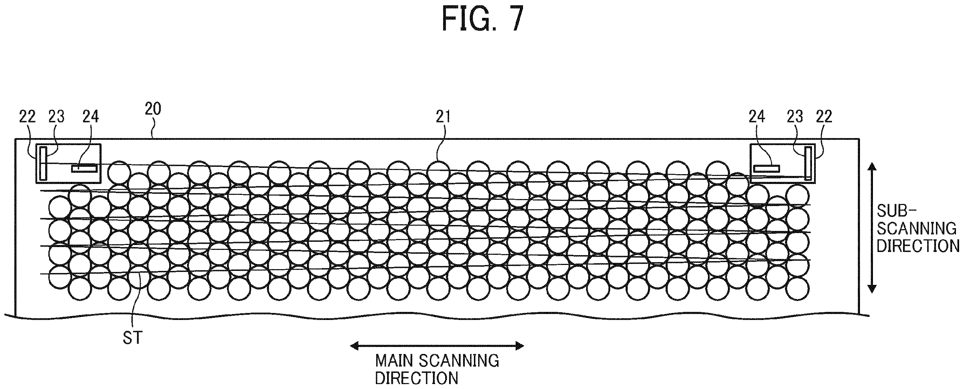

FIG. 7 is a diagram illustrating a concrete example of an intermediate screen 20 not falling under the scope of the present invention.

The intermediate screen 20 includes a microlens array 21 where a large number of microlenses are arranged in the main scanning direction and the sub-scanning direction within the optical scanning range that is scanned by laser beams, and a reflection unit 22 that guides the laser beams to the photodetector 14. In the intermediate screen 20 illustrated in FIG. 7 as an example, in order to detect the laser beams that are two-dimensionally scanned on the to-be-scanned surface at both ends in the main scanning direction and one end in the sub-scanning direction, the reflection unit 22 is each disposed at positions overlapping with the trajectory ST of the laser beam at both ends on the upper side of FIG. 7 in the main scanning direction. The laser beams that are reflected by the reflection unit 22 enter the photodetector 14. Alternatively, a light-receptive lens may be arranged immediately in front of the photodetector 14 to adjust the beam diameter of the laser beams.

The reflection unit 22 includes a main-scanning control reflector 23 that is elongated in the sub-scanning direction, and a sub-scanning control reflector 24 that is elongated in the main scanning direction. In the present embodiment, the reflection unit 22 is configured in the manner as described above, and the amplitude of the light deflector 13 can be controlled in both of the main scanning direction and the sub-scanning direction. In other words, the controller 17 controls the amplitude of the light deflector 13 in the main scanning direction based on the timing at which the photodetector 14 detects the laser beams reflected by the main-scanning control reflector 23, and controls the amplitude of the light deflector 13 in the sub-scanning direction based on the timing at which the photodetector 14 detects the laser beams reflected by the sub-scanning control reflector 24.

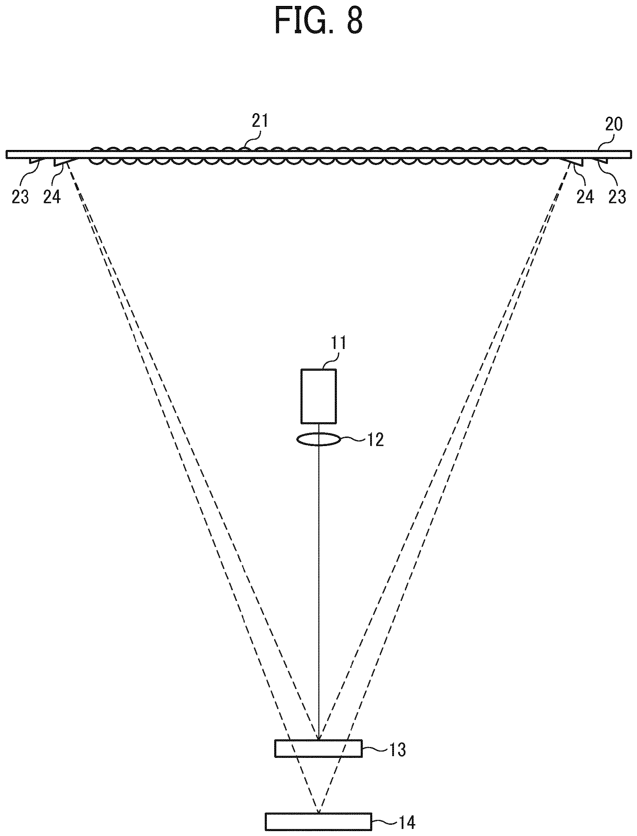

FIG. 8 is a diagram illustrating the relative positions of the intermediate screen 20 and the photodetector 14, according to the second embodiment, and depicts a vertical-direction bird's-eye view of the central axis of a laser beam that is two-dimensionally scanned on the intermediate screen 20.

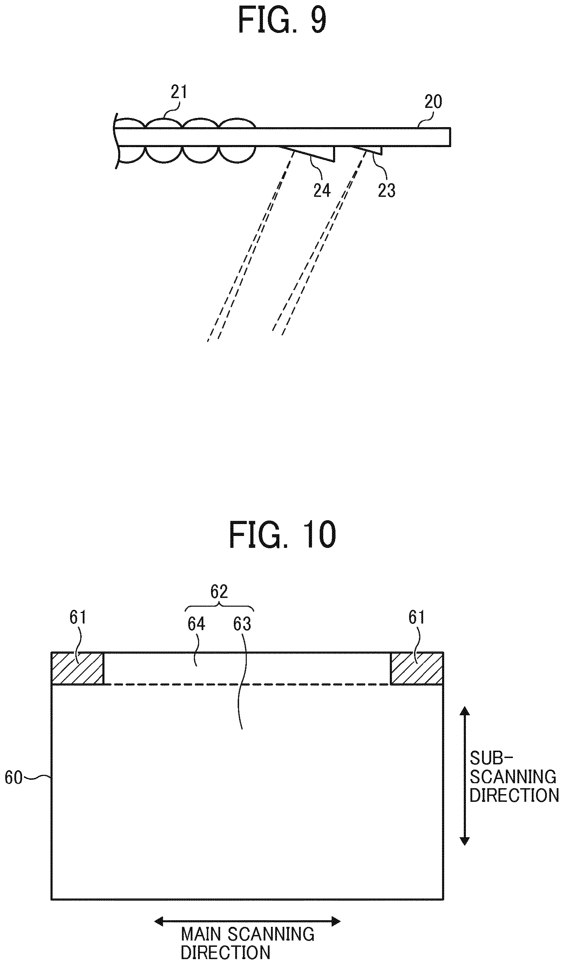

FIG. 9 is a magnified view of the right side of the intermediate screen 20 of FIG. 8.

As illustrated in FIG. 8 and FIG. 9, the main-scanning control reflector 23 and the sub-scanning control reflector 24 are inclined with reference to the board surface of the intermediate screen 20 such that the direction in which the laser beams are reflected is directed to the photodetector 14 with reference to the incident directions of the scanned laser beams. Currently, the micro lens array 21 can be manufactured by molding, and the main-scanning control reflector 23 and the sub-scanning control reflector 24 may be made into metal molds to enable collective processing.

In the first embodiment as described above, the photodetector 14 is directly disposed onto the light transmission member 15 that is the to-be-scanned surface and is disposed in the detection fields 61, and the image drawing area 62 in the optical scanning range 60 is configured to include an area adjacent to the detection fields 61 in the main scanning direction and an area adjacent to the detection fields 61 in the sub-scanning direction. Due to this configuration, the proportion of the image drawing area 62 in the optical scanning range 60 is increased. However, in actuality, the photodetector 14 has a certain degree of size as a package, and is implemented on a substrate to obtain an electrical signal.
For this reason, in the configuration where the photodetector 14 is directly disposed on the to-be-scanned surface as in the first embodiment, the size of the detection field 61 tends to be large, and the image drawing area 62 tends to be small proportionately.

By contrast, in the present embodiment, the photodetector 14 is not disposed onto the intermediate screen 20 that serves as a to-be-scanned surface, and the laser beams that are reflected by the reflection unit 22, which is disposed on the intermediate screen 20, enter the photodetector 14. Due to this configuration, irrespective of the package size of the photodetector 14 or the size of the substrate, the size of the detection field 61 in the optical scanning range 60 can be reduced and the image drawing area 62 can be broadened.

FIG. 10 is a diagram illustrating a layout of the optical scanning range 60, according to the present embodiment.

As illustrated in FIG. 10, also in the present embodiment, all the area of the optical scanning range 60 from which the detection fields 61 are removed is used as the image drawing area 62 on which an image is to be drawn by the laser beams that scan the to-be-scanned surface. In other words, the image drawing area 62 includes an area adjacent to the detection fields 61 in the main scanning direction, and an area adjacent to the detection fields 61 in the sub-scanning direction. In particular, in the present embodiment, the size of the detection field 61 can be reduced compared with the example according to the first embodiment illustrated in FIG. 4. Accordingly, the image drawing area 62 can be broadened proportionately. Also in the present embodiment, the image drawing area 62 is divided into a main drawing area 63 that includes an area adjacent to the detection fields 61 in the sub-scanning direction, and a sub-drawing area 64 that includes an area adjacent to the detection fields 61 in the main scanning direction. As different kinds of images are drawn on each one of the main drawing area 63 and the sub-drawing area 64, the image drawing area 62 that is not in a simple rectangular shape can effectively be utilized.

As described above with some concrete examples, according to the present embodiment, the intermediate screen 20 that includes the microlens array 21 serves as a to-be-scanned surface, and projects onto the screen 40 an image that is drawn by the laser beams that scan the to-be-scanned surface. Accordingly, the speckle patterns of the laser beams can be reduced, and the utilization efficiency of light can be improved. Thus, the screen 40 can display a projection image with high resolution.

Moreover, according to the present embodiment, the reflection unit 22 is disposed on the intermediate screen 20 that serves as a to-be-scanned surface, and the laser beams that are reflected by the reflection unit 22 enter the photodetector 14. Due to this configuration, the proportion of the image drawing area 62 in the optical scanning range 60 can further be increased compared with that of the first embodiment, and the angle of view of the projection image that is displayed on the screen 40 can further be increased.

Moreover, according to the present embodiment, the reflection unit 22 includes the main-scanning control reflector 23 and the sub-scanning control reflector 24, and controls the amplitude of the light deflector 13 in the main scanning direction based on the timing at which the photodetector 14 detects the laser beams reflected by the main-scanning control reflector 23, and controls the amplitude of the light deflector 13 in the sub-scanning direction based on the timing at which the photodetector 14 detects the laser beams reflected by the sub-scanning control reflector 24. Accordingly, both the amplitude of the light deflector 13 in the main scanning direction and the amplitude of the light deflector 13 in the sub-scanning direction can be controlled appropriately.

### <Modification of Intermediate Screen>

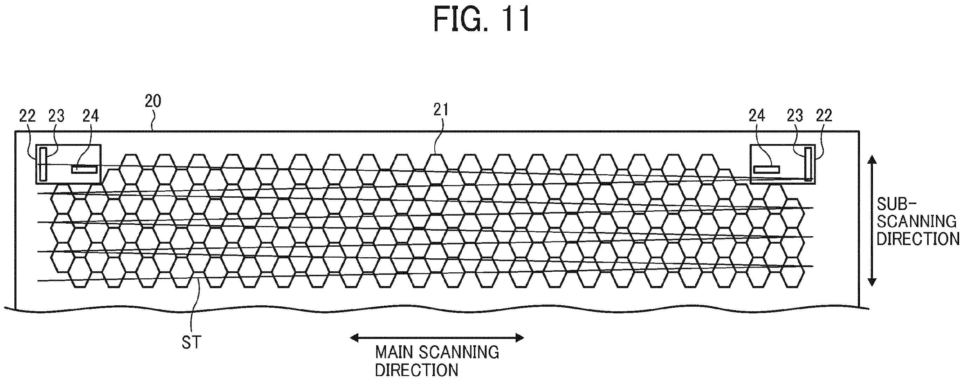

Here, a modification of the intermediate screen 20 in the optical scanner 10B as above is described. The intermediate screen 20 as illustrated in FIG. 7 is provided with the microlens array 21 where a large number of circular micro lenses are arranged in the main scanning direction and the sub-scanning direction, but the shape of the micro lenses that together configure the microlens array 21 is not limited to the circular shape. For example, as illustrated in FIG. 11, the microlens array 21 of the intermediate screen 20 may be provided a number of polygonal micro lenses arranged in the main scanning direction and the sub-scanning direction. As the shape of the micro lenses that together configure the microlens array 21 is made polygonal as illustrated in FIG. 11, the gap among the microlenses can be eliminated.

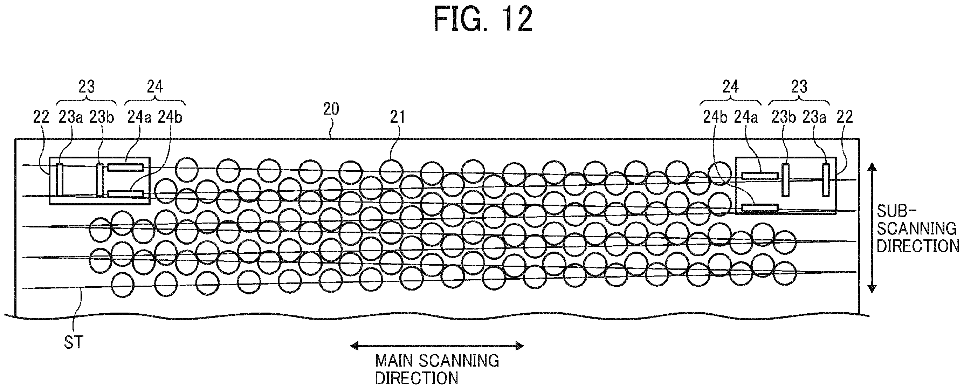

In the invention, as illustrated in FIG. 12 to FIG. 14, the microlens array 21 of the intermediate screen 20 is arranged such that the trajectory ST of the laser beam scanning the to-be-scanned surface approximately matches the center of each one of the microlenses. The microlenses are arranged in accordance with the sinusoidal trajectory in the main scanning direction. In such a configuration, microlenses that correspond to the pixels of the scanning line of the first half of the go and return scanning and microlenses that correspond to the pixels of the scanning line of the second half of the go and return scanning are arranged alternately in the horizontal direction. As a result, these microlenses are separated from each other.

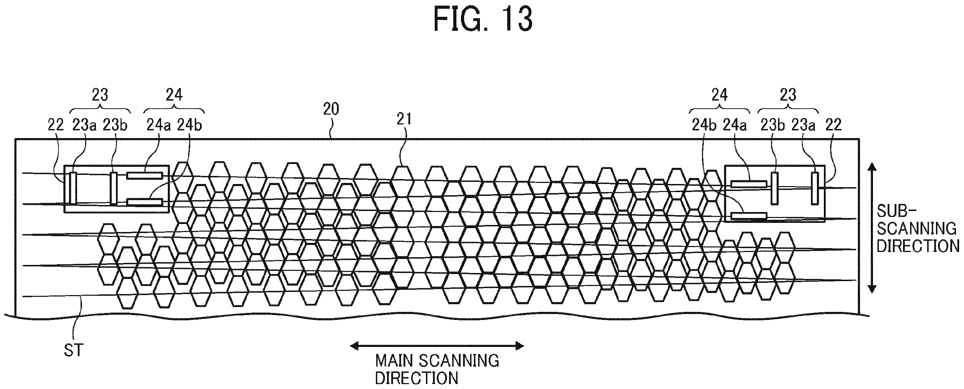

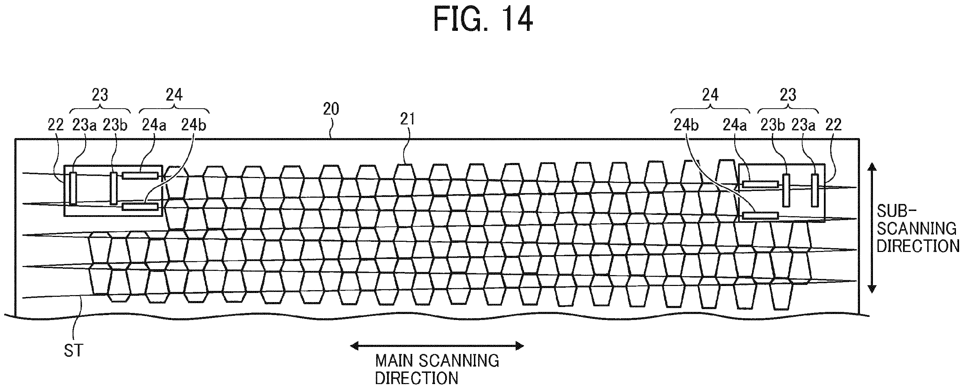

In the sinusoidal trajectory, the scanning makes a turn at the edges of the optical scanning range in the main scanning direction. Accordingly, the pitches of the scanning lines that are in close proximity to one another in the sub-scanning direction become denser than the other scanning areas. For this reason, if the microlenses of the same size are arranged with the same pitch, not only in the microlens array 21 that is composed of circular microlenses, as illustrated in FIG. 12, but also in the microlens array 21 that is composed of polygonal microlenses, as illustrated in FIG. 13, the gap between microlenses of the microlens array tends to be large at edges in the main scanning direction. In order to deal with such a situation, as illustrated in FIG. 14, the polygonal shapes of the microlenses that together configure the microlens array 21 may be varied at the center compared with the edges in the main scanning direction. Accordingly, the gap among the microlenses can be eliminated.

As in the modifications of the intermediate screen 20 illustrated in FIG. 12 to FIG. 14, the microlens array 21 may be arranged such that the trajectory ST of the laser beam scanning the to-be-scanned surface approximately matches the center of each one of the microlenses. Due to this configuration, the deterioration of image due to a mismatch between the scanning trajectory ST of the laser beam and the arrangement of the microlenses can effectively reduced, and the image quality and the utilization efficiency of light of a projection image that is displayed on the screen 40 can further be improved.

Moreover, in the modifications of the intermediate screen 20 as illustrated in FIG. 12 to FIG. 14, the main-scanning control reflector 23 of the reflection unit 22 includes a plurality of reflection planes 23a and 23b that are disposed at intervals approximately equal to the array pitch of the microlenses that together configure the microlens array 21 in the main scanning direction, and the sub-scanning control reflector 24 of the reflection unit 22 includes a plurality of reflection planes 24a and 24b that are disposed at intervals approximately equal to the array pitch of the microlenses that together configure the microlens array 21 in the sub-scanning direction.

When the intermediate screen 20 as configured above is adopted, the timing at which the laser beam source 11 emits the laser beams is controlled based on the timing at which the photodetector 14 detects the laser beams reflected by the reflection plane 23a of the main-scanning control reflector 23 on one side and the timing at which the photodetector 14 detects the laser beams reflected by the reflection plane 23b of the main-scanning control reflector 23 on the other side. Due to this configuration, the laser beams can be emitted in accordance with the positions of the respective microlenses. Accordingly, the image quality of a projection image that is displayed on the screen 40 can be improved, and the utilization efficiency of light can be improved. Thus, a bright projection image can be displayed.

Moreover, the value of the bias of the driving voltage in the sub-scanning direction to be applied to the light deflector 13 is controlled based on the timing at which the photodetector 14 detects the laser beams reflected by the reflection plane 24a of the sub-scanning control reflector 24 on one side and the timing at which the photodetector 14 detects the laser beams reflected by the reflection plane 24b of the sub-scanning control reflector 24 on the other side. Due to this configuration, the scanning trajectory of the laser beams can be controlled in accordance with the positions of the respective microlenses. Accordingly, the image quality of a projection image that is displayed on the screen 40 can be improved, and the utilization efficiency of light can be improved. Thus, a bright projection image can be displayed.

When the reflection planes 23a and 23b of the main-scanning control reflector 23 or the reflection planes 24a and 24b of the sub-scanning control reflector 24 are arranged with a pitch approximately equal to the array pitch of the microlenses, there may be some cases in which the area of each reflection plane becomes too small and it is difficult to guide the laser beams to the photodetector 14 appropriately. In such cases, the gap between the reflection plane 23a and the reflection plane 23b or the gap between the reflection plane 24a and the reflection plane 24b may be made wider than the array pitch of the microlenses, and the timing at which the photodetector 14 detected the laser beams may be adjusted according to the rate at which the gaps are widened. Upon doing so, the control as described above may be performed.

### <Modification of Laser Beam Source and Light Deflector>

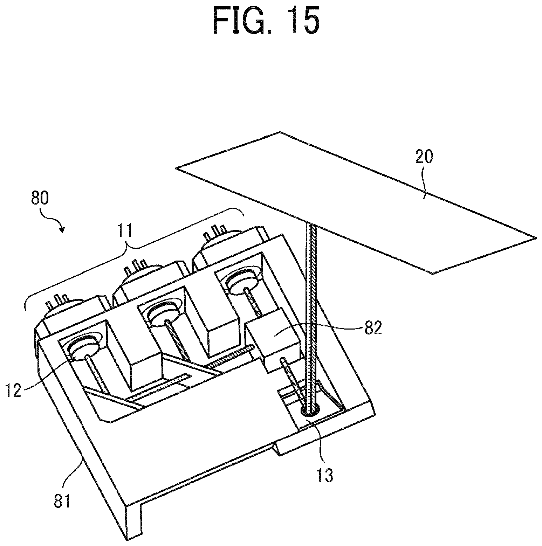

Next, a modification of the laser beam source 11 and the light deflector 13 in the optical scanner 10B as above is described. For example, the laser beam source 11 and the light deflector 13 may integrally be formed as a single optical unit 80, as illustrated in FIG. 15.

FIG. 15 is a diagram illustrating the optical unit 80 provided with the laser beam source 11 and the light deflector 13, according to a modification of the embodiments of the present disclosure.

In the optical unit 80, three-color RGB (red, green, blue) laser beams are combined and scan the surface of the intermediate screen 20. Accordingly, a color image can be drawn.

In the optical unit 80 illustrated in FIG. 15, the light deflector 13 and the laser beam source 11 that emits three-color RGB laser beams are supported by a housing 81, and collimator lenses 12 that approximately collimate the laser beams diverging from the laser beam sources 11 are disposed near the optical exit ends of the three laser beam sources 11 in the housing 81. Moreover, a combining prism 82 that combines three-color laser beams is disposed in the housing 81. The three-color laser beams that are emitted from the laser beam sources 11 and are approximately collimated by the collimator lenses 12 are combined by the combining prism 82, and enter the light deflector 13. The light deflector 13 two-dimensionally scans the combined three-color laser beams on the intermediate screen 20 that serves as a to-be-scanned surface, to draw a color image on the intermediate screen 20. As this color image is projected onto the screen 40, the screen 40 can display a color projection image.

### <Third Embodiment>

In the first embodiment and the second embodiment as described above, example applications to the projector 100A and the projector 100B were described. In the present embodiment, an example application to a heads-up display (HUD) is described.

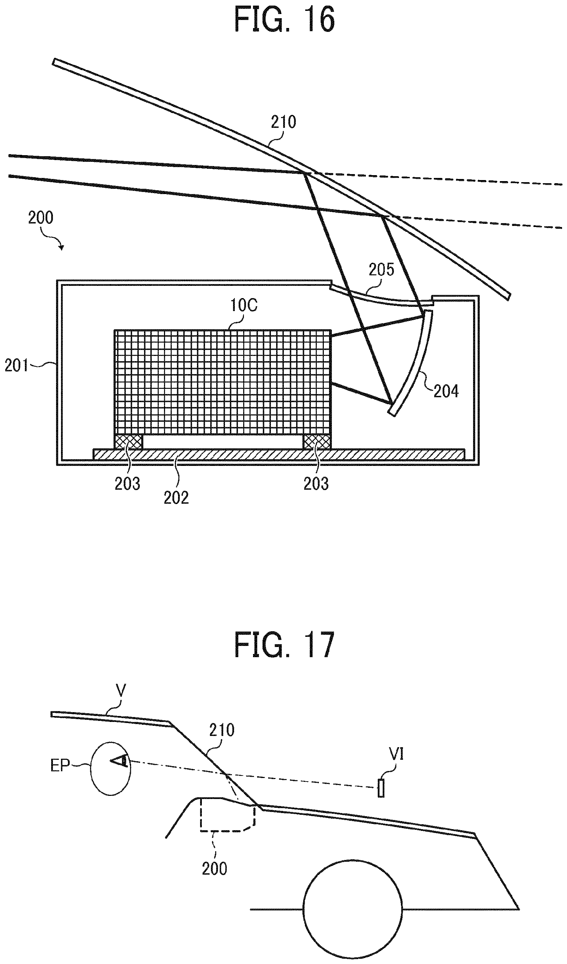

FIG. 16 is a diagram illustrating a general configuration of a heads-up display 200 according to a third embodiment of the present disclosure.

FIG. 17 is a diagram illustrating a vehicle V provided with the heads-up display 200, according to the third embodiment. The heads-up display 200 according to the present embodiment, as illustrated in FIG.

FIG. 16 and FIG. 17, is a heads-up display of windshield type where the front windshield 210 of the vehicle V is used as a part of the projection plane.

As illustrated in FIG. 16, in the heads-up display 200, an optical scanner 10C is disposed on a base 202 in a housing 201 having a vibration isolator 203 therebetween, and an image that is drawn by the optical scanner 10C is reflected by a projection mirror 204 and projected onto the front windshield 210 through an exit window 205. In the heads-up display 200, as illustrated in FIG. 17, an image that is drawn by the optical scanner 10C is projected onto the front windshield 210 (glass member) ahead of the location of the eyepoint EP (observation point) of the driver of the vehicle V. Due to this configuration, the virtual image VI of an image that is drawn by the optical scanner 10C can visually be recognized from the location of the eyepoint EP of the driver through the front windshield 210. In other words, an image that is drawn by the optical scanner 10C is reflected by the front windshield 210 and reaches the location of the eyepoint EP of the driver. Accordingly, from eyepoint EP of the driver, the virtual image VI of that image is recognized as an image that is projected onto the screen ahead of the front windshield 210 by a few meters.

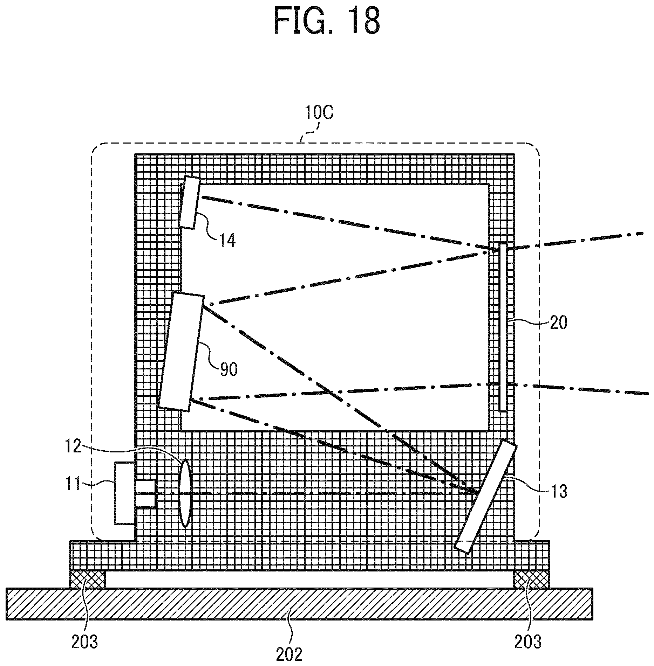

FIG. 18 is a diagram illustrating a general configuration of the optical scanner 10C provided for the heads-up display 200, according to the present embodiment.

The basic configuration of the optical scanner 10C is equivalent to that of the optical scanner 10B in the second embodiment as described above, and the intermediate screen 20 that includes the microlens array 21 and the reflection unit 22 servers as a to-be-scanned surface. However, in the optical scanner 10C in the present embodiment, for the purposes of installing it appropriately in the limited space of the vehicle V, the laser beams that are deflected and scanned by the light deflector 13 are reflected and turned by a mirror 90, and the intermediate screen 20 is irradiated with the laser beams. Due to this configuration, downsizing is achieved.

In a similar manner to the optical scanner 10B in the second embodiment, also in the optical scanner 10C in the present embodiment, the laser beams that are emitted from the laser beam source 11 are two-dimensionally scanned by the light deflector 13 in the main scanning direction and the sub-scanning direction on the intermediate screen 20. Further, at least at edges of the optical scanning range 60 in the main scanning direction, which is on the intermediate screen 20, the laser beams are reflected by the reflection unit 22 and enter the photodetector 14. Due to this configuration, the laser beams that have scanned the to-be-scanned surface can be detected by the photodetector 14. Moreover, the surface of the intermediate screen 20 is scanned by the laser beams that are modulated according to the image data. Accordingly, an image that is modulated according to the image data is drawn on the intermediate screen 20, and that image is projected onto the front windshield 210 of the vehicle V. Although only one laser beam source 11 is illustrated in FIG. 18, RGB three-color laser beam sources 11 may be provided like the optical unit 80 illustrated in FIG. 15 to draw a color image on the intermediate screen 20, and such a color image may be projected onto the front windshield 210 of the vehicle V.

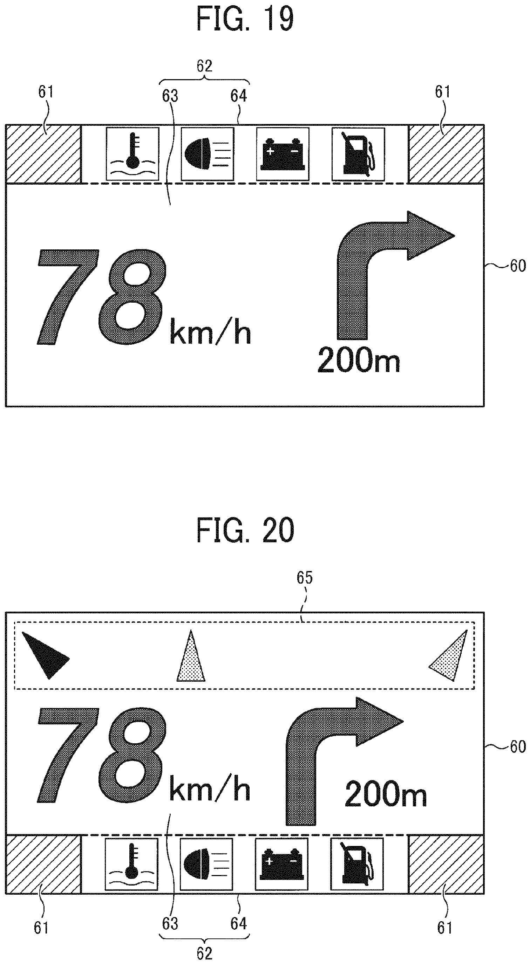

FIG. 19 to FIG. 21 are diagrams each illustrating an image that is projected onto the front windshield 210 of the vehicle V upon being drawn on the intermediate screen 20, according to the present embodiment.

In the example image illustrated in FIG. 19, the right and left edges on the upper side of the optical scanning range 60 serve as the detection fields 61, and the other area serves as the image drawing area 62. Further, the image drawing area 62 is divided into the main drawing area 63 of large size and the sub-drawing area 64 of small size with reference to the positions of the detection fields 61, and a speedmeter and a navigation image are drawn in the main drawing area 63 and warning images are drawn in the sub-drawing area 64. As described above, as the image drawing area 62 is divided into the main drawing area 63 and the sub-drawing area 64 with reference to the positions of the detection fields 61 and suitable images are drawn on each of the areas, even if the shape of the image drawing area 62 is not in a simple rectangular shape, an image can be projected onto the front windshield 210 of the vehicle V appropriately making full use of the image drawing area 62.

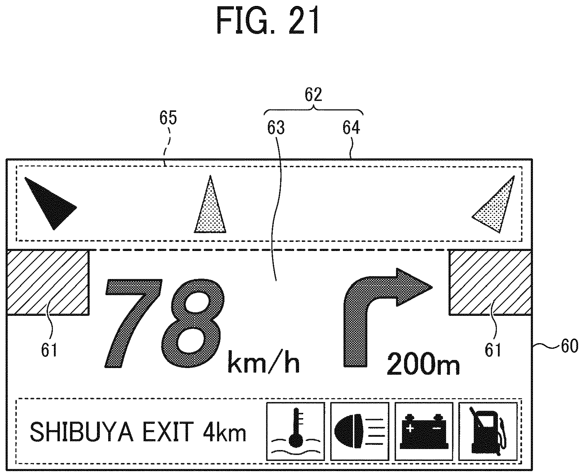

In the example image as illustrated in FIG. 20, the right and left edges on the lower side of the optical scanning range 60 serve as the detection fields 61, and the other area serves as the image drawing area 62. Further, the image drawing area 62 is divided into the main drawing area 63 of large size and the sub-drawing area 64 of small size with reference to the positions of the detection fields 61, and augmented reality (AR) images, a speedmeter, and a navigation image are drawn on the main drawing area 63 and a warning image is drawn on the sub-drawing area 64. In the example image as illustrated in FIG. 21, the right and left edges in the middle of the optical scanning range 60 in the vertical direction serve as the detection fields 61, and the other area serves as the image drawing area 62. Further, the image drawing area 62 is divided into the main drawing area 63 of large size and the sub-drawing area 64 of small size with reference to the positions of the detection fields 61, and a speedmeter, a navigation image, and warning images are drawn on the main drawing area 63 and AR images are drawn on the sub-drawing area 64.

Currently, augmented reality (AR) technology is being applied to heads-up displays such as the heads-up display 200 provided for the vehicle V as in the embodiments as described above, and as a concrete example, for example, devices, which are aimed at achieving collision avoidance, are known that display information related to the detection of an area ahead of the vehicle as an augmented reality (AR) image. In order to display such an AR image appropriately, there is an increasing demand for reserving the upper side of the image drawing area 62 as an area 65, which is wide in the horizontal direction, on which AR images are to be drawn. In the example images illustrated in FIG. 20 and FIG. 21, the right and left edges of the optical scanning range 60 on the lower side or the right and left edges of the optical scanning range 60 in the middle serve as the detection fields 61. Accordingly, the area 65 that is wide in the horizontal direction and thus is suitable for drawing an AR image can be reserved on the upper side of the optical scanning range 60.

As described above with some concrete examples, with the heads-up display 200 according to the present embodiment, the proportion of the image drawing area 62 in the optical scanning range 60 can be increased in a similar manner to the projector 100B according to the second embodiment as described above, the angle of view of an image that is to be projected onto the front windshield 210 of the vehicle V can be increased. Moreover, the intermediate screen 20 that includes the microlens array 21 serves as a to-be-scanned surface, and an image that is drawn by the laser beams that have scanned the to-be-scanned surface is projected onto the front windshield 210 of the vehicle V. Due to this configuration, the speckle patterns of the laser beams can be reduced, and the utilization efficiency of light can be improved. Further, a image of high resolution can be projected onto the front windshield 210 of the vehicle V.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

## Claims

1. An optical scanner (10A, 10B, 10C) comprising:
a light source (11) configured to emit light;
a light deflector (13) configured to deflect the light emitted from the light source (11) to scan a to-be-scanned surface (15, 20) in a first direction and a second direction;
a photodetector (14) disposed on or above the to-be-scanned surface (15, 20) and configured to detect incident light and output a signal; and
a controller (17) configured to control at least one of operation of the light source (11) and operation of the light deflector (13) based on the signal output from the photodetector (14),
wherein the to-be-scanned surface (15, 20) includes an optical scanning range (60) on which the light is scanned, the optical scanning range (60) including at least one detection field (61) in which the photodetector (14) detects the light, and an image drawing area (62) on which an image is drawn, the image drawing area (62) including a first area (64) neighboring the at least one detection field (61) in the first direction and a second area (63) neighboring the at least one detection field (61) in the second direction, and
wherein the to-be-scanned surface (15, 20) is a screen (20) having a microlens array (21) on which a plurality of microlenses are disposed, and
the to-be-scanned surface (15, 20) includes a reflection unit (22) at least at an edge of the optical scanning range (60) on the screen (20) in the first direction, the reflection unit (22) reflects the light to the photodetector (14),
**characterized in that**
the reflection unit (22) includes a plurality of reflection planes (23a, 23b, 24a, 24b) disposed at intervals approximately equal to an array pitch of the plurality of microlenses that together configure the microlens array (21), and
the microlenses are arranged in accordance with the sinusoidal trajectory in the main scanning direction, wherein the plurality of microlenses in the microlens array (21) are arranged such that sinusoidal trajectory of light scanning the to-be-scanned surface (15, 20) approximately matches a center of each one of the plurality of microlenses, wherein
microlenses that correspond to the pixels of the scanning line of the first half of the go and return scanning and microlenses that correspond to the pixels of the scanning line of the second half of the go and return scanning are arranged alternately in the horizontal direction.

2. The optical scanner (10A, 10B, 10C) according to claim 1, wherein the image drawing area (62) includes a first area (64) adjacent to the at least one detection field (61) in the first direction and a second area (63) adjacent to the at least one detection field (61) in the second direction.

3. The optical scanner (10A, 10B, 10C) according to claim 1 or 2, wherein the image drawing area (62) is divided into a plurality of drawing areas (63, 64) with reference to a position of the at least one detection field (61), and each one of the plurality of drawing areas (63, 64) displays a different type of image.

4. The optical scanner (10A, 10B, 10C) according to any one of claims 1 to 3, wherein
the at least one detection field (61) is an area on the screen (20) including the reflection unit (22).

5. The optical scanner (10A, 10B, 10C) according to claim 1, wherein the controller (17) controls timing of light emission at the light source (11) based on a timing at which the photodetector (14) detects light reflected by one of the plurality of reflection planes (23a, 23b, 24a, 24b) of the reflection unit (22) and a timing at which the photodetector (14) detects light reflected by another one of the plurality of reflection planes (23a, 23b, 24a, 24b) of the reflection unit (22).

6. The optical scanner (10A, 10B, 10C) according to any one of claims 3 to 5, wherein
the reflection unit (22) includes a first scanning control reflector (23) and a second scanning control reflector (24), and
the controller (17) controls amplitude of the light deflector (13) in the first direction based on a timing at which the photodetector (14) detects light reflected by the first scanning control reflector (23), and controls amplitude of the light deflector (13) in the second direction based on a timing at which the photodetector (14) detects light reflected by the second scanning control reflector (24).

7. The optical scanner (10A, 10B, 10C) according to any one of claims 1 to 6, wherein
the image drawing area (62) includes an AR image area (65) in which an augmented reality (AR) image is displayed,
the at least one detection field (61) includes at least two detection fields (61) in the second direction, and
the AR image area (65) is different from an area sandwiched between the at least two detection fields (61) in the second direction.

8. A projector (100A, 100B) comprising
the optical scanner (10A, 10B, 10C) according to any one of claims 1 to 7,
wherein an image drawn by light that scan the image drawing area (62) on the to-be-scanned surface (15, 20) is projected onto a screen (40).

9. A heads-up display (200) comprising
the optical scanner (10A, 10B, 10C) according to any one of claims 1 to 7,
wherein an image drawn by light that scan the image drawing area (62) on the to-be-scanned surface (15, 20) is projected onto a transparent member (210) ahead of an observation point (EP) to enable visual recognition of a virtual image (VI) of the image at the observation point (EP) through the transparent member (210).

## Patentansprüche

1. Optischer Scanner (10A, 10B, 10C) mit:
Einer Lichtquelle (11), die konfiguriert ist, um Licht zu emittieren;
einem Lichtablenker (13), der konfiguriert ist, um das von der Lichtquelle (11) emittierte Licht abzulenken, um eine zu scannende Oberfläche (15, 20) in einer ersten Richtung und einer zweiten Richtung abzutasten;
einem Fotodetektor (14), der auf oder über der zu scannenden Oberfläche (15, 20) angeordnet und konfiguriert ist, um einfallendes Licht zu erfassen und ein Signal auszugeben; und
einer Steuerung (17), die konfiguriert ist, um mindestens den Betrieb der Lichtquelle (11) oder den Betrieb des Lichtablenkers (13) basierend auf dem vom Fotodetektor (14) ausgegebenen Signal zu steuern;
wobei die zu scannende Oberfläche (15, 20) einen optischen Abtastbereich (60) umfasst, auf dem das Licht abgetastet wird, wobei der optische Abtastbereich (60) mindestens ein Erfassungsfeld (61) enthält, in dem der Fotodetektor (14) das Licht erfasst, und einen Bildzeichnungsbereich (62), auf dem ein Bild gezeichnet wird, wobei der Bildzeichnungsbereich (62) einen ersten Bereich (64) enthält, der dem mindestens einen Erfassungsfeld (61) in der ersten Richtung benachbart ist, und einen zweiten Bereich (63), der dem mindestens einen Erfassungsfeld (61) in der zweiten Richtung benachbart ist, und
wobei die zu scannende Oberfläche (15, 20) ein Bildschirm (20) mit einer Mikrolinsenanordnung (21) ist, auf der eine Vielzahl an Mikrolinsen angeordnet sind, und
die zu scannende Oberfläche (15, 20) eine Reflexionseinheit (22) mindestens an einer Kante des optischen Abtastbereichs (60) auf dem Bildschirm (20) in der ersten Richtung umfasst, wobei die Reflexionseinheit (22) das Licht zum Fotodetektor (14) reflektiert, **dadurch gekennzeichnet, dass**
die Reflexionseinheit (22) mehrere Reflexionsebenen (23a, 23b, 24a, 24b) umfasst, die in Intervallen angeordnet sind, die ungefähr gleich einem Array-Abstand der Vielzahl der Mikrolinsen sind, die zusammen das Mikrolinsen-Array (21) konfigurieren, und
die Mikrolinsen gemäß der sinusförmigen Trajektorie in der Hauptabtastrichtung angeordnet sind, wobei die Vielzahl der Mikrolinsen in der Mikrolinsenanordnung (21) so angeordnet sind, dass die sinusförmige Trajektorie des Lichts, das die abzutastende Oberfläche (15, 20) abtastet, ungefähr zu einem Zentrum jeder aus der Vielzahl der Mikrolinsen passt, wobei
Mikrolinsen, die den Pixeln der Abtastzeile der ersten Hälfte des Hin- und Rück-Abtastens bzw. Scannens entsprechen, und Mikrolinsen, die den Pixeln der Abtastzeile der zweiten Hälfte des Hin- und Rück-Abtastens bzw. Scannens entsprechen, abwechselnd in horizontaler Richtung angeordnet sind.

2. Optischer Scanner (10A, 10B, 10C) nach Anspruch 1, wobei der Bildzeichnungsbereich (62) einen ersten Bereich (64) neben dem mindestens einen Erfassungsfeld (61) in der ersten Richtung und einen zweiten Bereich (63) neben dem mindestens einen Erfassungsfeld (61) in der zweiten Richtung umfasst.

3. Optischer Scanner (10A, 10B, 10C) nach Anspruch 1 oder 2, wobei der Bildzeichnungsbereich (62) in Bezug auf eine Position des mindestens einen Erfassungsfelds (61) in mehrere Zeichenbereiche (63, 64) unterteilt ist, und jeder der mehreren Zeichenbereiche (63, 64) einen anderen Bildtyp anzeigt.

4. Optischer Scanner (10A, 10B, 10C) nach einem der Ansprüche 1 bis 3, wobei das mindestens eine Erfassungsfeld (61) ein Bereich auf dem Bildschirm (20) ist, einschließlich der Reflexionseinheit (22).

5. Optischer Scanner (10A, 10B, 10C) nach Anspruch 1, wobei die Steuerung (17) das Timing der Lichtemission an der Lichtquelle (11) basierend auf einem Timing steuert, zu dem der Fotodetektor (14) Licht erfasst, das von einer der mehreren Reflexionsebenen (23a, 23b, 24a, 24b) der Reflexionseinheit (22) reflektiert wird, und einem Timing, zu dem der Fotodetektor (14) Licht erfasst, das von einer anderen der mehreren Reflexionsebenen (23a, 23b, 24a, 24b) der Reflexionseinheit (22) reflektiert wird.

6. Optischer Scanner (10A, 10B, 10C) nach einem der Ansprüche 3 bis 5, wobei
die Reflexionseinheit (22) einen ersten Abtaststeuerreflektor (23) und einen zweiten Abtaststeuerreflektor (24) umfasst, und
die Steuerung (17) die Amplitude des Lichtablenkers (13) in der ersten Richtung basierend auf einem Timing steuert, zu dem der Fotodetektor (14) vom ersten Abtaststeuerungsreflektor (23) reflektiertes Licht erfasst, und die Amplitude des Lichtablenkers (13) in der zweiten Richtung basierend auf einem Timing steuert, zu dem der Fotodetektor (14) vom zweiten Abtaststeuerungsreflektor (24) reflektiertes Licht erfasst.

7. Optischer Scanner (10A, 10B, 10C) nach einem der Ansprüche 1 bis 6, wobei
der Bildzeichnungsbereich (62) einen AR-Bildbereich (65) enthält, in dem ein Augmented-Reality (AR)-Bild angezeigt wird,
das mindestens eine Erfassungsfeld (61) mindestens zwei Erfassungsfelder (61) in der zweiten Richtung umfasst, und
der AR-Bildbereich (65) sich von einem Bereich unterscheidet, der zwischen den mindestens zwei Erfassungsfeldern (61) in der zweiten Richtung angeordnet ist.

8. Projektor (100A, 100B) mit:
Dem optischen Scanner (10A, 10B, 10C) gemäß einem der Ansprüche 1 bis 7,
wobei ein durch Licht gezeichnetes Bild, das den Bildzeichnungsbereich (62) auf der zu scannenden Oberfläche (15, 20) abtastet, auf einen Bildschirm (40) projiziert wird.

9. Heads-up-Display (200) mit:
Dem optischen Scanner (10A, 10B, 10C) gemäß einem der Ansprüche 1 bis 7,
wobei ein durch Licht gezeichnetes Bild, das den Bildzeichnungsbereich (62) auf der zu scannenden Oberfläche (15, 20) abtastet, auf ein transparentes Element (210) vor einem Beobachtungspunkt (EP) projiziert wird, um eine visuelle Erkennung eines virtuelles Bildes (VI) des Bildes am Beobachtungspunkt (EP) durch das transparente Element (210) zu ermöglichen.

## Revendications

1. Dispositif de balayage optique (10A, 10B, 10C), comprenant :
une source de lumière (11) configurée pour émettre de la lumière ;
un déflecteur de lumière (13) configuré pour défléchir la lumière émise à partir de la source de lumière (11) pour balayer une surface destinée à être balayée (15, 20) dans une première direction et une seconde direction ;
un photodétecteur (14) disposé sur ou au-dessus de la surface destinée à être balayée (15, 20) et configuré pour détecter de la lumière incidence et envoyer un signal ; et
une unité de commande (17) configurée pour commander au moins un du fonctionnement de la source de lumière (11) et du fonctionnement du déflecteur de lumière (13) sur la base du signal envoyé à partir du photodétecteur (14),
dans lequel la surface destinée à être balayée (15, 20) inclut une étendue de balayage optique (60) sur laquelle la lumière est balayée, l'étendue de balayage optique (60) incluant au moins un champ de détection (61) dans lequel le photodétecteur (14) détecte la lumière, et une zone de tracé d'image (62) sur laquelle une image est tracée, la zone de tracé d'image (62) incluant une première zone (64) avoisinant l'au moins un champ de détection (61) dans la première direction et une seconde zone (63) avoisinant l'au moins un champ de détection (61) dans la seconde direction, et
dans lequel la surface destinée à être balayée (15, 20) est un écran (20) ayant un réseau de microlentilles (21) sur lequel une pluralité de microlentilles sont disposées, et
la surface destinée à être balayée (15, 20) inclut une unité de réflexion (22) au moins à un bord de l'étendue de balayage optique (60) sur l'écran (20) dans la première direction, l'unité de réflexion (22) réfléchit la lumière vers le photodétecteur (14),
**caractérisé en ce que**
l'unité de réflexion (22) inclut une pluralité de plans de réflexion (23a, 23b, 24a, 24b) disposés à des intervalles approximativement égaux à un pas de réseau de la pluralité de microlentilles qui ensemble configurent le réseau de microlentilles (21), et
les microlentilles sont agencées conformément à la trajectoire sinusoïdale dans la direction de balayage principale, dans lequel la pluralité de microlentilles dans le réseau de microlentilles (21) sont agencées de telle sorte que la trajectoire sinusoïdale de lumière balayant la surface destinée à être balayée (15, 20) soit approximativement assortie à un centre de chacun de la pluralité de microlentilles, dans lequel
des microlentilles qui correspondent aux pixels de la ligne de balayage de la première moitié du balayage aller-retour et des microlentilles qui correspondent aux pixels de la ligne de balayage de la seconde moitié du balayage aller-retour sont agencées de façon alternée dans la direction horizontale.

2. Dispositif de balayage optique (10A, 10B, 10C) selon la revendication 1, dans lequel la zone de tracé d'image (62) inclut une première zone (64) adjacente à l'au moins un champ de détection (61) dans la première direction et une seconde zone (63) adjacente à l'au moins un champ de détection (61) dans la seconde direction.

3. Dispositif de balayage optique (10A, 10B, 10C) selon la revendication 1 ou 2, dans lequel la zone de tracé d'image (62) est divisée en une pluralité de zones de tracé (63, 64) en référence à une position de l'au moins un champ de détection (61), et chacune de la pluralité de zones de tracé (63, 64) affiche un type d'image différent.

4. Dispositif de balayage optique (10A, 10B, 10C) selon l'une quelconque des revendications 1 à 3, dans lequel l'au moins un champ de détection (61) est une zone sur l'écran (20) incluant l'unité de réflexion (22).

5. Dispositif de balayage optique (10A, 10B, 10C) selon la revendication 1, dans lequel l'unité de commande (17) commande l'instant d'émission de lumière à la source de lumière (11) sur la base d'un instant auquel le photodétecteur (14) détecte de la lumière réfléchie par un de la pluralité de plans de réflexion (23a, 23b, 24a, 24b) de l'unité de réflexion (22) et d'un instant auquel le photodétecteur (14) détecte de la lumière réfléchie par un autre de la pluralité de plans de réflexion (23a, 23b, 24a, 24b) de l'unité de réflexion (22).

6. Dispositif de balayage optique (10A, 10B, 10C) selon l'une quelconque des revendications 3 à 5, dans lequel
l'unité de réflexion (22) inclut un premier réflecteur de commande de balayage (23) et un second réflecteur de commande de balayage (24), et
l'unité de commande (17) commande l'amplitude du déflecteur de lumière (13) dans la première direction sur la base d'un instant auquel le photodétecteur (14) détecte de la lumière réfléchie par le premier réflecteur de commande de balayage (23), et commande une amplitude du déflecteur de lumière (13) dans la seconde direction sur la base d'un instant auquel le photodétecteur (14) détecte de la lumière réfléchie par le second réflecteur de commande de balayage (24).

7. Dispositif de balayage optique (10A, 10B, 10C) selon l'une quelconque des revendications 1 à 6, dans lequel
la zone de tracé d'image (62) inclut une zone d'image d'AR (65) dans laquelle une image de réalité augmentée (AR) est affichée,
l'au moins un champ de détection (61) inclut au moins deux champs de détection (61) dans la seconde direction, et
la zone d'image d'AR (65) est différente d'une zone prise en sandwich entre les au moins deux champs de détection (61) dans la seconde direction.

8. Projecteur (100A, 100B), comprenant
le dispositif de balayage optique (10A, 10B, 10C) selon l'une quelconque des revendications 1 à 7,
dans lequel une image tracée par de la lumière qui balaye la zone de tracé d'image (62) sur la surface destinée à être balayée (15, 20) est projetée sur un écran (40).

9. Affichage tête haute (200), comprenant
le dispositif de balayage optique (10A, 10B, 10C) selon l'une quelconque des revendications 1 à 7,
dans lequel une image tracée par de la lumière qui balaye la zone de tracé d'image (62) sur la surface destinée à être balayée (15, 20) est projetée sur un élément transparent (210) devant un point d'observation (EP) pour permettre la reconnaissance visuelle d'une image virtuelle (VI) de l'image au point d'observation (EP) à travers l'élément transparent (210).
